# EUROPEAN PATENT APPLICATION

(11) **EP 2 447 531 A1**
(43) Date of publication of application: **02.05.2012**
(21) Application number: 09846500.8
(22) Date of filing: 24.06.2009
(51) Int. Cl.: F03D 11/04

(54) **WIND-DRIVEN GENERATOR DEVICE**

(71) Applicant: Mitsubishi Heavy Industries, Ltd., Tokyo 108-8215 (JP)
(72) Inventor: NODA, Yoshitomo, Tokyo 108-8215 (JP); NUMAJIRI, Tomohiro, Tokyo 108-8215 (JP); SEKI, Seita, Tokyo 108-8215 (JP)
(74) Representative: Intès, Didier Gérard André
(86) International application number: PCT/JP2009/061502
(87) International publication number: WO 2010/150367

(57) **Abstract**

A wind turbine generator provided with a sliding bearing as a yawing ring bearing that can reduce shifting of an axial center by making radial-direction clearances small. In a wind turbine generator in which a nacelle (3) installed at the top of a tower (2) is turnably supported via a yawing sliding bearing (30), the yawing sliding bearing (30) is provided with a sliding member 33 disposed between top and bottom support surfaces of a flange formed mainly at a stationary portion (32) and a turning portion (31); and a rolling element (34) disposed between the stationary portion (32) of the yawing sliding bearing (30) and the turning portion (31).

## Description

### Technical Field

The present invention relates to a wind turbine generator in which power is generated by a generator driven by a main shaft that rotates by receiving wind force, and it relates, in particular, to a structure of a sliding bearing employed in a yawing (YAW) ring bearing structure of a wind turbine generator.

### Background Art

A wind turbine generator is a device in which a rotor head provided with turbine blades rotates by receiving wind force, and this rotation is sped up by a gearbox to drive a generator, thereby generating power. In addition, because the gearbox and the generator inside a nacelle installed at a top portion of a tower are connected, in order to match the orientation of the rotor head with the constantly changing wind direction, a yawing device for turning the nacelle on the tower is required.

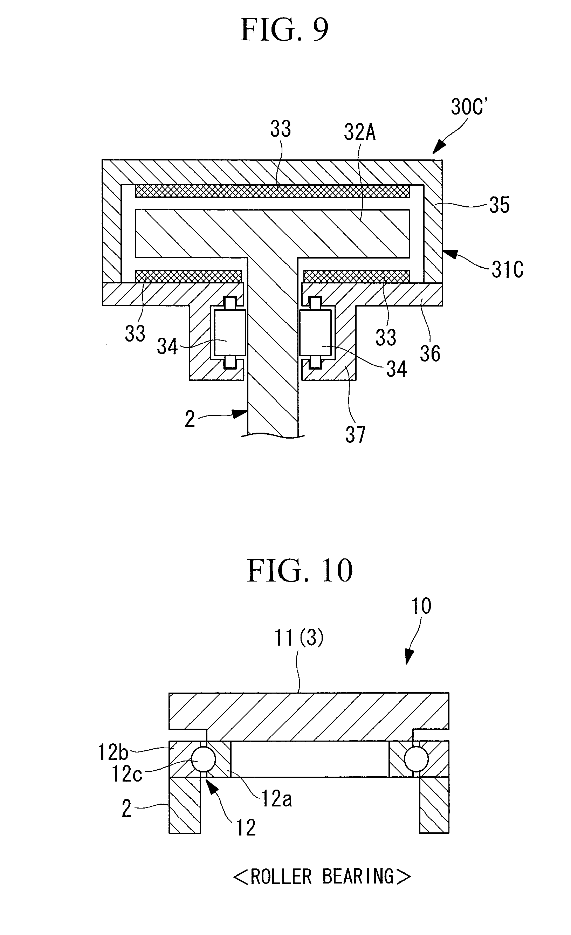

Fig. 9 shows an example configuration of a conventional yawing device.
In a yawing device 10 shown in Fig. 9, a roller bearing 12 is employed, in which steel balls 12c or the like are interposed between an inner ring 12a secured to a base member (nacelle base plate) 11 on a nacelle 3 side, which turns on the tower, and an outer ring 12b secured to a tower 2 side, which is stationary. That is, in the illustrated yawing device 10, the roller bearing 12 is employed as a yawing ring bearing.

The yawing device 10 in this case is provided with a stationary gear 13 formed on an outer circumferential surface of the outer ring 12b and a drive gear 15 that is rotated by a yawing motor 14 secured on the nacelle 3 side. Thus, by engaging the drive gear 15 with the stationary gear 13, the drive gear 15 revolves around the stationary gear 13 in accordance with the rotation direction of the yawing motor 14; therefore, the base member 11 and the yawing motor 14 turn clockwise or counter-clockwise relative to the stationary tower.
Note that reference numeral 16 in the figure is a brake disk, 17 is a brake pad, and 18 is a brake bracket.

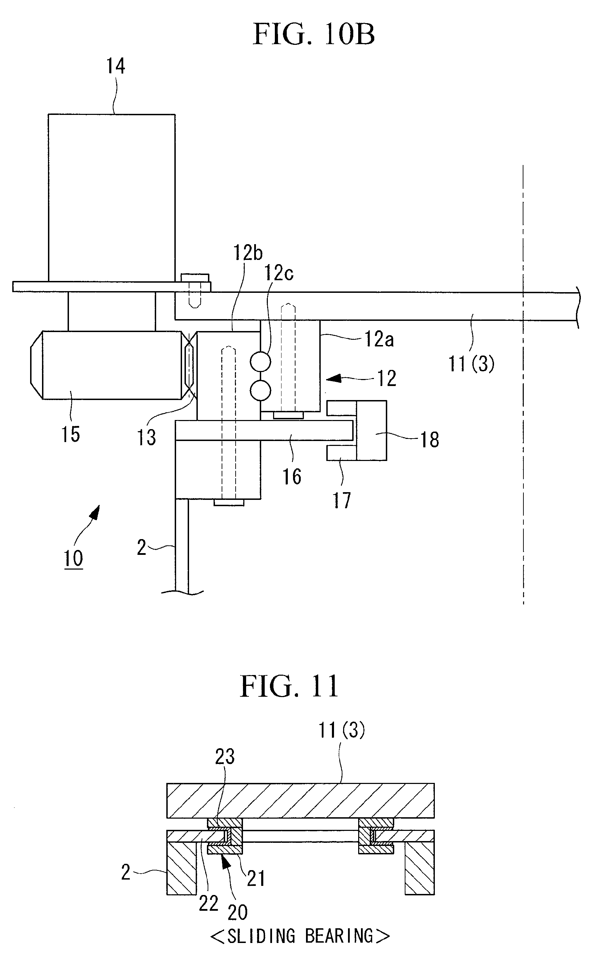

In addition, among conventional wind turbine generators, there are those that employ, for example, a sliding bearing 20 shown in Figs. 10A and 10B as the yawing ring bearing described above.
In the sliding bearing 20 show in Figs. 10A and 10B, a sliding bearing member 23 is interposed between a turning portion 21 secured to the base member (nacelle base plate) 11 on the nacelle 3 side, which turns on the tower 2, and a stationary portion 22 secured on the stationary tower 2 side. The sliding bearing member 23 in this case mainly bears moment load due to wind load received by blades with top and bottom flat portions of the stationary portion (flange portion) 22 formed at the top portion of the tower 2, and the sliding bearing member 23 that comes in contact with flat portions is secured to the nacelle side.

In addition, as a spherical-surface sliding bearing that can bear radial load that acts on a rotation shaft, one in which a sliding material is disposed on a outer ring side of roller bearing portion has been disclosed (for example, see Patent Citation 1).
Patent Citation 1: Unexamined Japanese Patent Application, Publication No. 2006-312965.

### Disclosure of Invention

The above-described sliding bearing 20 is suitable as a yawing ring bearing for a large wind turbine generator as compared with the roller bearing 12.
That is, because a yawing ring bearing having a large diameter becomes necessary with the size enlargement of a wind turbine generator, the roller bearing 12, which makes it difficult to have a divided construction, has problems of increased costs from having to make the ball bearing 12c, etc. as custom-made parts, land transportation limits, and so on.

With the sliding bearing 20 on the other hand, because a divided construction is possible, the problems with costs, land transportation, etc. can easily be dealt with; therefore, it serves as a yawing ring bearing that can easily cope with the size enlargement of wind turbine generators.
In the sliding bearing 20 as compared with the roller bearing 12, however, there is a problem in that radial (radial) direction clearances that exist on an inner ring side and an outer ring side are larger, and shaft centers on the tower side and the nacelle side tend to become shifted. That is, the sliding bearing 20 normally requires initial clearances of about 1 mm in the radial direction, and, moreover, because the sliding bearing member 23 becomes worn with continued operation, the initial clearances end up becoming larger with increasing operation time.

Accordingly, when the sliding bearing 20 is employed as a yawing ring bearing, the shaft centers move and become shifted due to the clearances. Such shifting of the shaft centers changes the positional relationship with a yawing motor that turns the nacelle and eventually changes the backlash between the gears on the drive side and the stationary side; therefore, excessive loads act on the gears on the drive side and the stationary side, thereby inhibiting smooth operation of the yawing device.
Note that, in the case of the roller bearing 12, the problems with the clearances do not occur because the radial clearances can be set from 0 to a negative value.

Against such a background, with regard to a sliding bearing which is advantageous as a yawing ring bearing for wind turbine generators, whose size has increasing in recent years, there is a demand for reducing shifting of shaft centers by making the radial-direction clearances smaller.
The present invention has been conceived in light of the above-described circumstances, and an object thereof is to provide a wind turbine generator provided with a sliding bearing as a yawing ring bearing that is capable of reducing shifting of shaft centers by making the radial-direction clearances smaller.

In order to solve the above-described problems, the present invention employs the following solutions.
A wind turbine generator according to Claim 1 is a wind turbine generator that turnably supports a nacelle installed at the top of a tower via a yawing sliding bearing, wherein the yawing sliding bearing is provided with a sliding member disposed between top and bottom support surfaces of a flange formed mainly at a stationary portion and a turning portion; and a rolling element disposed between the stationary portion of the yawing sliding bearing and the turning portion.

With such a wind turbine generator, because the yawing sliding bearing is provided with the sliding member disposed between the top and bottom support surfaces of the flange formed mainly at the stationary portion and the turning portion and the rolling elements disposed between the stationary portion and the turning portion of the yawing sliding bearing, the radial-direction clearances that form in the bearing can be reduced. As the rolling elements in this case, rollers having a cylindrical shape, hollow-cylindrical shape, or the like may be employed.

With the above-described invention, it is preferable that the rolling element be a roller follower and the turning portion be arranged in a circumferential direction by being divided into multiple portions; accordingly, a divided construction is employed for the bearing whose size is increased, and the turning portion does not require a support structure provided over the entire circumference. In addition, with regard to loads in the axial (shaft) direction when the divided construction is employed, the area of the sliding bearing member should be adjusted in accordance with the loads. Furthermore, when the yawing sliding bearing is damaged, partial replacement of the damaged portions is also possible.
In this case, it is preferable that the roller follower be provided with a clearance-adjusting mechanism; accordingly, manufacturing tolerances for the clearances can be set loosely during manufacturing at a factory, and the clearances can eventually be adjusted at a construction site. In addition, it is also possible to easily adjust the clearances in portions that are partially replaced at a construction site when the yawing sliding bearing is damaged.

With the above-described invention, in the yawing sliding bearing, the flange preferably has a T-shape forming top and bottom support surfaces on an inner circumferential side and an outer circumferential side of the stationary portion, and it is preferable that the rolling element be provided on at least one of the inner circumferential side and the outer circumferential side of the stationary portion; accordingly, deformation of a yawing sliding bearing structure due to the load of the moment load can be suppressed.

According to the present invention, with regard to a sliding bearing which is advantageous as a yawing ring bearing for wind turbine generators, whose the size has been increasing in recent years, shifting of shaft centers can be reduced by making radial-direction clearances smaller; therefore, a yawing device can smoothly be operated by preventing unwanted load from acting on gears on the drive side and the stationary side. Accordingly, in a wind turbine generator provided with a yawing device that employs a sliding bearing as a yawing ring bearing, turning of a nacelle becomes smooth, and considerable advantages are afforded in enhancing the reliability and durability.

### Brief Description of Drawings

[FIG. 1A] Fig. 1A is a longitudinal sectional view of relevant portions showing a yawing sliding bearing structure that turnably supports a nacelle, which shows a first embodiment of a wind turbine generator according to the present invention.
[FIG. 1B] Fig. 1B is a lateral sectional view of Fig. 1A.
[FIG. 2] Fig. 2 is a side view showing, in outline, the wind turbine generator.
[FIG. 3A] Fig. 3A is a longitudinal sectional view of the relevant portion showing a yawing sliding bearing structure that turnably supports a nacelle, which shows a second embodiment of a wind turbine generator according to the present invention.
[FIG. 3B] Fig. 3B is a perspective view showing a divided sliding bearing unit of the yawing sliding bearing structure in Fig. 3A.
[FIG. 3C] Fig. 3C is a perspective view showing a roller follower in Figs. 3A and 3B in enlargement.
[FIG. 4] Fig. 4 is a lateral sectional view of the yawing sliding bearing structure shown in Fig. 3A.
[FIG. 5A] Fig. 5A is a diagram showing a first modification of the sliding bearing unit in Fig. 3B and is a longitudinal sectional view of an example configuration in which a clearance-adjusting mechanism is provided in the roller follower.
[FIG. 5B] Fig. 5B is an enlarged view of the relevant portion in Fig. 5A.
[FIG. 6A] Fig. 6A is a lateral sectional view of the first modification shown in Fig. 5A.
[FIG. 6B] Fig. 6B is an enlarged view of the relevant portion in Fig. 6A.
[FIG. 7] Fig. 7 is a longitudinal sectional perspective view of relevant portions showing a yawing sliding bearing structure having an integrated structure, which shows a third embodiment of a wind turbine generator according to the present invention.
[FIG. 8] Fig. 8 is a longitudinal sectional perspective view of relevant portions showing a yawing sliding bearing structure having a T-shaped flange portion, which shows a fourth embodiment of a wind turbine generator according to the present invention.
[FIG. 9] Fig. 9 is a longitudinal sectional view showing a first modification of the yawing sliding bearing structure in Fig. 8.
[FIG. 10A] Fig. 10A is a diagram showing an example configuration of a conventionally structured yawing device provided with a roller bearing.
[FIG. 10B] Fig. 10B is a longitudinal sectional view of the yawing device shown in Fig. 10A in which the configuration of the relevant portion is enlarged.
[FIG. 11] Fig. 11 is a diagram showing an example configuration of a conventionally structured yawing device provided with a sliding bearing.

### Explanation of Reference:

1: wind turbine generator
2: tower (support pillar)
3: nacelle
10A: yawing device
11: base member (nacelle base plate)
21: stationary gear
22: base member (nacelle base plate)
23: yawing motor
24: drive gear
30, 30A, 30B, 30C, 30D: yawing sliding bearing
31, 31B: turning portion
31A: turning bearing unit
32, 32A: stationary portion
33: horizontal sliding bearing member (horizontal bearing member)
34: rolling element
40: roller follower
50: spring-preloaded mechanism
60: clearance-adjusting mechanism

### Best Mode for Carrying Out the Invention

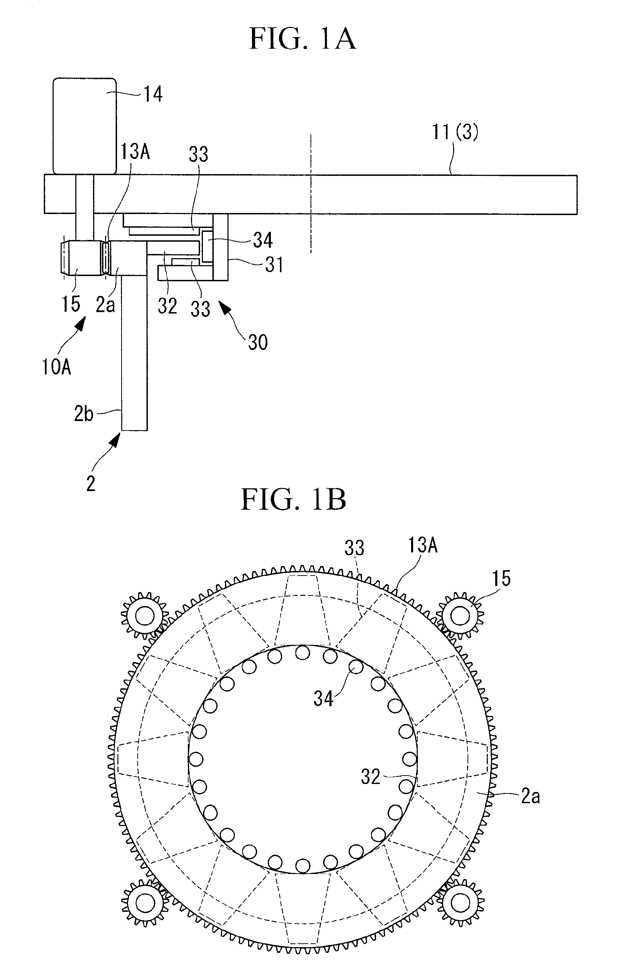

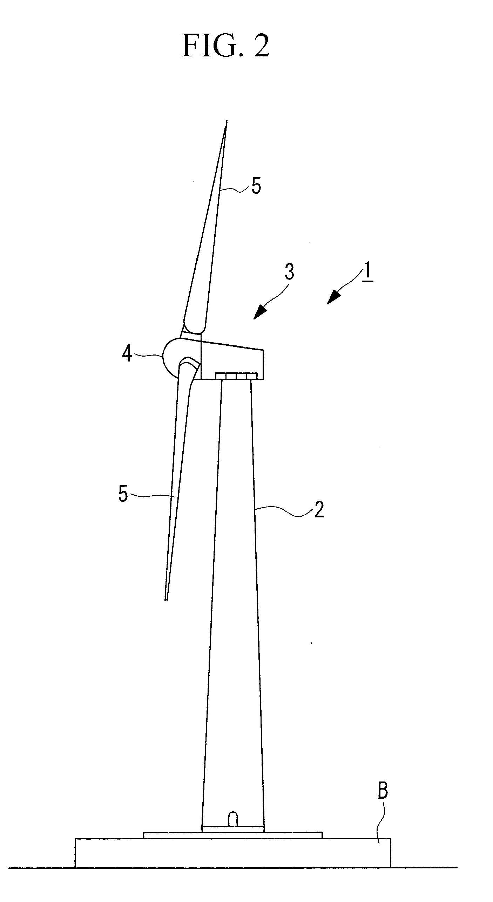

An embodiment of a wind turbine generator according to the present invention will be described below with reference to Figs. 1A, 1B, and 2.
A wind turbine generator 1 shown in Fig. 2 is provided with a tower (also referred to as a "support pillar") 2 erected on a foundation B, a nacelle 3 installed at a top end of the tower 2, and a rotor head 4 provided at the nacelle 3 by being supported thereat so as to be able to rotate about a rotation axis in a substantially horizontal lateral direction.
A plurality of (for example, three) turbine rotor blades 5 are attached to the rotor head 4 around the rotation axis thereof in a radiating manner. Accordingly, the force of wind striking the turbine rotor blades 5 from the direction of the rotation axis of the rotor head 4 is converted to a motive force that rotates the rotor head 4 about the rotation axis.

### <First Embodiment>

The above-described wind turbine generator 1 is provided with a yawing device 10A that is installed at the top end of the tower 2 for turning the nacelle 3 in order to match the orientation of the rotor head 4 with the constantly changing wind direction.
This yawing device 10A is provided with a yawing sliding bearing 30 that mainly bears a moment load at flat portions thereof in order to turnably support the nacelle 3 installed at the top end of the tower 2.

The illustrated yawing sliding bearing 30 is configured such that horizontal sliding bearing members (hereinafter referred to as "horizontal bearing members") 33 and rolling elements 34 are interposed between a turning portion 31 secured to a base member (nacelle base plate) 11 on the nacelle 3 side, which turns at the top end of the tower 2, and a stationary portion 32 that are secured on the tower 2 side, which is stationary.

The turning portion 31 is a ring member having an angular U-shaped cross-section opening toward an outer circumferential side and is secured to a bottom surface of the base member 11 at an inner circumferential side of the tower 2. In this case, the turning portion 31 is mounted so that a shaft center position of the turning portion 31, that is, a turning shaft center position of the nacelle 3, coincides with an axial center position of the tower 2. Note that, the turning portion 31 may be a single-piece ring member or a ring member divided into multiple portions in a circumferential direction.

The stationary portion 32 is a flange portion that is horizontally formed from a hollow-cylindrical member 2a, which is a separate piece secured to the top end of the tower 2, so as to extend toward the inner side of the tower 2. Because the stationary portion (flange portion) 32 forms a sliding bearing by having top and bottom flat portions thereof in contact with the horizontal bearing members 33, treatment for reducing the coefficient of friction is applied thereto. Note that, the reference sign 2b in the figure is a tower body.

The horizontal bearing members 33 are plate-like members made of plastic or the like that are securedly attached at top and bottom inner surfaces of the turning portion 31, in other words, inner-side flat portions (opposing surfaces) formed at the top and bottom of the angular U-shaped cross-section. In the illustrated example configuration, the horizontal bearing members 33 are divided in the circumferential direction into 12 portions having substantially trapezoidal shapes and are individually arranged in the circumferential direction at equal pitch. Note that, the number of portions into which the horizontal bearing members 33 are divided is not limited to twelve, and they also need not be arranged at equal pitch so long as they are symmetrically arranged with respect to a load. The total area of the divided horizontal bearing members 33 should be appropriately adjusted in accordance with a load that acts on the yawing sliding bearing 30 in an axial (shaft) direction.

As the rolling elements 34, for example, rollers having cylindrical shapes or the like are employed. The rolling elements 34 are held at the turning portion 31 in a vertical orientation so that curved portions, such as hollow-cylindrical side surfaces or the like, come in contact with the inner-circumferential-side vertical surface of the stationary portion 32. The rolling elements 34 are disposed in a large number at equal pitch in the circumferential direction.
Note that, the rolling elements 34 are not limited to the cylindrical rollers, and for example, hollow-cylindrical rollers, steel balls, or the like may be employed so long as they serve to reduce radial-direction clearances formed in the yawing sliding bearing 30.

The yawing device 10A provided with such a yawing sliding bearing 30 is provided with a stationary gear 13A that is formed at an outer circumferential surface of the hollow-cylindrical member 2a secured on the tower 2 side and a drive gear 15 that is rotated by a yawing motor 14 securedly installed at the base member 11 on the nacelle 3 side. Thus, by engaging the drive gear 15 with the stationary gear 13A, the drive gear 15 revolves around the stationary gear 13A in accordance with the rotation direction of the yawing motor 14; therefore, the base member 11 and the yawing motor 14 turn clockwise or counter-clockwise relative to the stationary tower, together with the drive gear 15.

In the illustrated example configuration, by employing the yawing sliding bearing 30, the load for turning movement increases by being subjected to a frictional force. Accordingly, four sets of the yawing motors 14 and the drive gears 15 are arranged at equal pitch in the circumferential direction, thereby increasing motor output; however, the number of the yawing motors 14, etc. is not limited to this.
In addition, the yawing device 10A in which the yawing sliding bearing 30 is employed can also utilize the frictional force, which is a reason for increasing the motor output, and loads of the yawing motors 14 with increased output as a braking force. Accordingly, with the yawing device 10A in which the yawing sliding bearing 30 is employed, braking mechanisms (the brake disk 16, brake pad 17, etc. shown in Fig. 9) needed to stop turning of the nacelle 3 are not required; therefore, it is effective for reducing the weight of the nacelle 3 and costs. In addition, because a hydraulic circuit needed to operate the braking mechanisms is also not required, piping for a hydraulic pump and valves are reduced, thereby enabling simplification.

In this way, the yawing device 10A of the wind turbine generator 1 described above mainly bears the moment load by disposing the sliding members 33 between the top and bottom support surfaces of the flange formed at the stationary portion 32 and the turning portion 31 and is provided with the rolling elements 34, which bear the radial-direction load, between the stationary portion 32 and the turning portion 31 of the yawing sliding bearing 30; therefore, the advantages of both a sliding bearing and a roller bearing are effectively utilized, and the radial-direction clearances that form in the yawing sliding bearing 30 can be reduced.

That is, with the above-described yawing sliding bearing 30, because the rolling elements 34 bear the radial-direction load, clearances between the inner-circumferential-side distal end of the flange portion, which serves as the stationary portion 32, and the rolling elements 34 can be set to be 0 or a negative value, as with a roller bearing. In other words, with the above-described yawing sliding bearing 30, because the rolling elements 34 bear the radial-direction load, the clearances formed between the stationary portion 32 and the rolling elements 34 can be made so small as to be eliminated.

### <Second Embodiment>

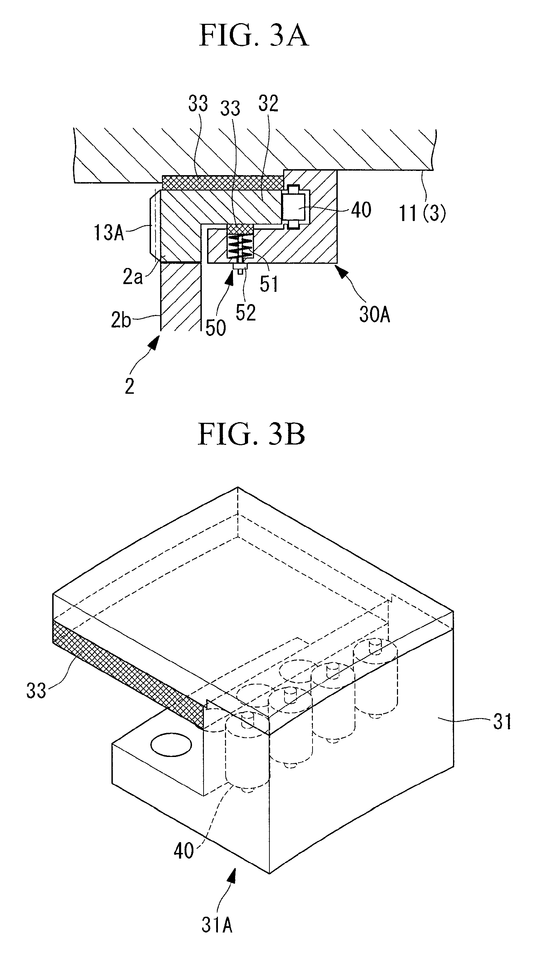

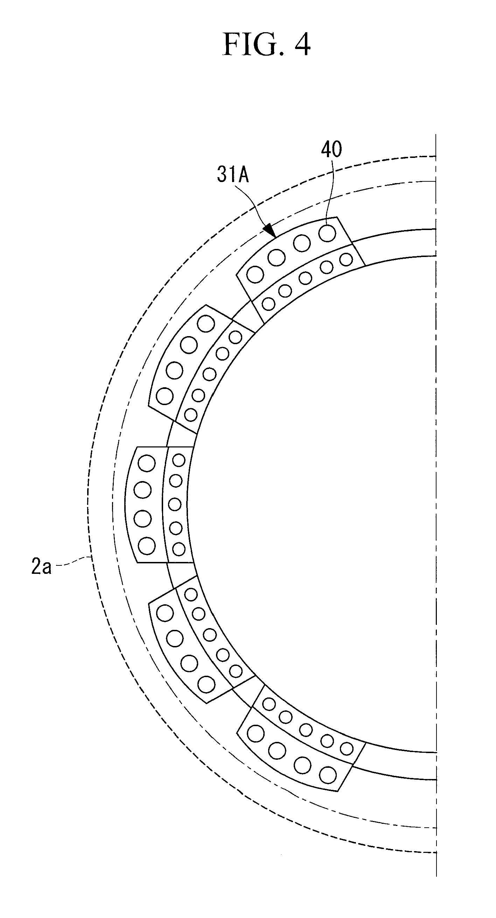

Next, a second embodiment of the wind turbine generator according to the present invention will be described on the basis of Figs. 3A to 6B. Note that the same reference signs are given to the same components as those in the above-described embodiment, and detailed descriptions thereof will be omitted.
In this embodiment, roller followers 40 are employed as the above-described rolling elements 34. A yawing sliding bearing 30A employs turning bearing units 31A that are divided into multiple portions in the circumferential direction of the turning portion 31, as shown in Figs. 3B and 4, for example. That is, the yawing sliding bearing 30A of this embodiment is configured such that a plurality of the turning-bearing units 31A are disposed in the circumferential direction at equal pitch instead of disposing the turning portion 31 over the entire circumference.

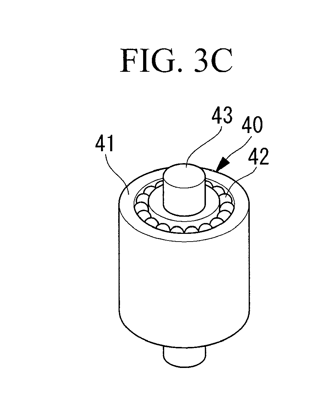

The roller followers 40 form sliding surfaces, as shown in Figs. 3A and 3C for example, wherein cylinders 41 come into rolling contact with an inner-circumferential-side vertical surface of the stationary portion 32. The cylinders 41 serve as the rolling followers 40 by having pins 43 inserted into the interior thereof via bearings 42.
The roller followers 40 having the above-described configuration freely revolve using the pins 43 as shafts, and inner circumferential surfaces of the cylinders 41 and outer circumferential surfaces of the pins 43 also come into rolling contact.
Note that, although four roller followers 40 are provided for a single turning bearing unit 31A in the illustrated example configuration, it is not limited to this, and the configuration of the roller followers 40 is also not particularly limited, so that it is possible to employ a configuration without the bearings 42, and so on.

For the turning portion 31 of the yawing sliding bearing 30 whose size is increased, by employing the turning bearing units 31A having a divided construction in this way, the turning bearing units 31A can be transported in a state in which they are assembled in advance; therefore, significant advantages are afforded in terms of eliminating problems with land transportation and simplifying work at a construction site.
In addition, the turning bearing units 31A do not have a ring member having an angular U-shaped cross-section over the entire circumference of the top end of the tower 2, and therefore, a support structure for securing the turning bearing units 31A to the base member 11 need not be provided over the entire circumference. Furthermore, the ring member having an angular U-shaped cross-section does not exist over the entire circumference of the top end of the tower 2, and therefore, the number of the roller followers 40 employed as the rolling elements 34 can also be reduced.

In addition, with the above-described yawing sliding bearing 30A, when a divided construction with a plurality of divided bearing units 31A is employed, loads in an axial (shaft) direction can be supported by appropriately adjusting the total area of the horizontal bearing members 33 in accordance with the loads.
In addition, when the turning bearing units 31A of the yawing sliding bearing 30A are damaged, employing the above-described divided construction makes it possible to respond with partial replacement of damaged portions.

Also, in the illustrated example configuration, spring-preloaded mechanisms 50 are provided in the horizontal bearing members 33 at the bottom surface side. The spring-preloaded mechanisms 50 adjust the elastic modulus of the springs 51 depending on fastening levels of nuts 52 by employing, for example, coil springs, disk springs, etc. as springs 51, thereby serving to change the contact pressure with which the horizontal bearing members 33 come in contact with the stationary portion 32. Note that, the spring-preloaded mechanisms 50 may be appropriately employed as needed.

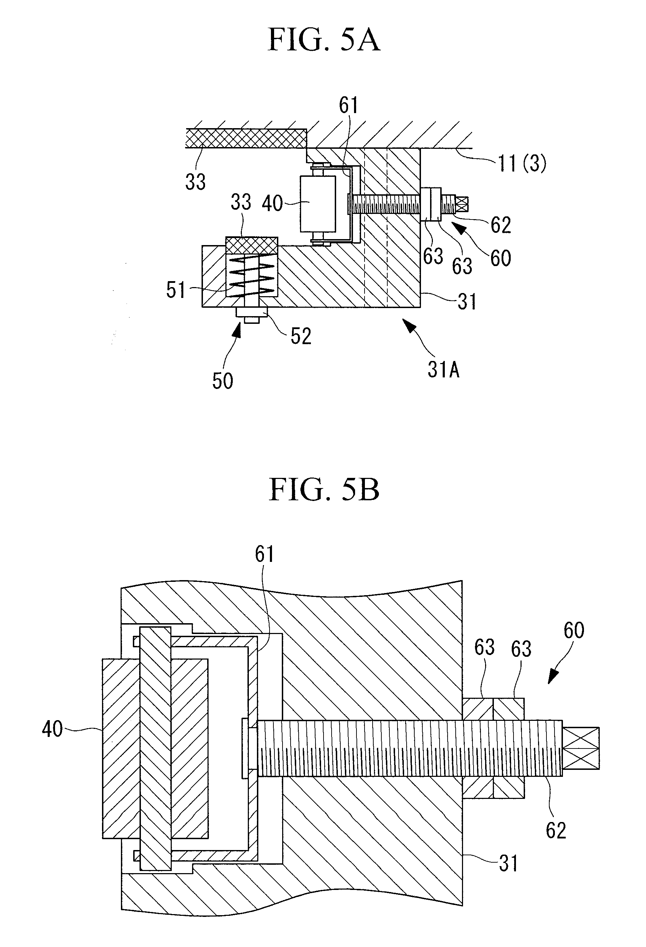

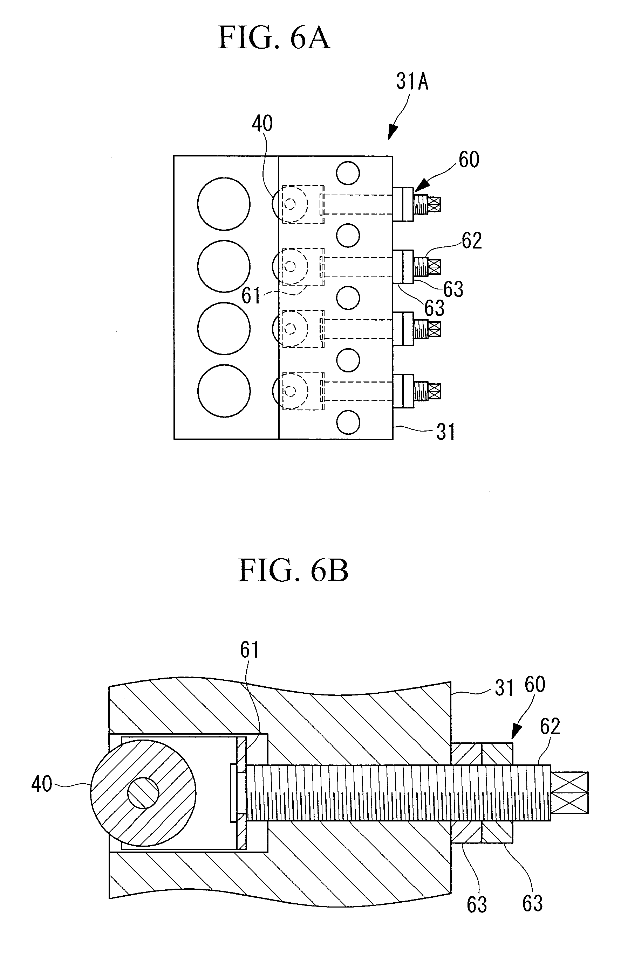

It is preferable that clearance-adjusting mechanisms 60 be provided for the above-described roller followers 40, as shown in Figs. 5A and 5B and Figs. 6A and 6B for example.
The illustrated clearance-adjusting mechanisms 60 are configured having holders 61 that have angular U-shaped cross-sections and that hold the roller followers 40; adjusting bolts 61 that support the holders 61 at one end thereof; and nuts 62 that engage with the other end of the adjusting bolts 61. Note that, although the nuts 63 are double nuts in the illustrated example configuration, they are not limited thereto.

Because such clearance-adjusting mechanisms 60 are provided, by changing engaged positions of the nuts 63 with respect to the adjusting bolts 62, the levels of protrusion of the roller followers 40 can be adjusted.
The levels of protrusion to be adjusted here change clearances that are formed between the sliding surfaces of the roller followers 40 and the inner-circumferential-side vertical surface of the stationary portion 32. Therefore, with the turning bearing units 31A provided with the clearance-adjusting mechanisms 60, an allowable error for the clearances can be set loosely during manufacturing and the clearances can be optimized by adjusting them at a construction site after completion of assembly.
In addition, the above-described clearance-adjusting mechanisms 60 also make it possible to easily adjust the clearances in the turning bearing units 31A at portions that are replaced at a construction site when the yawing sliding bearing 30A is damaged.

### <Third Embodiment>

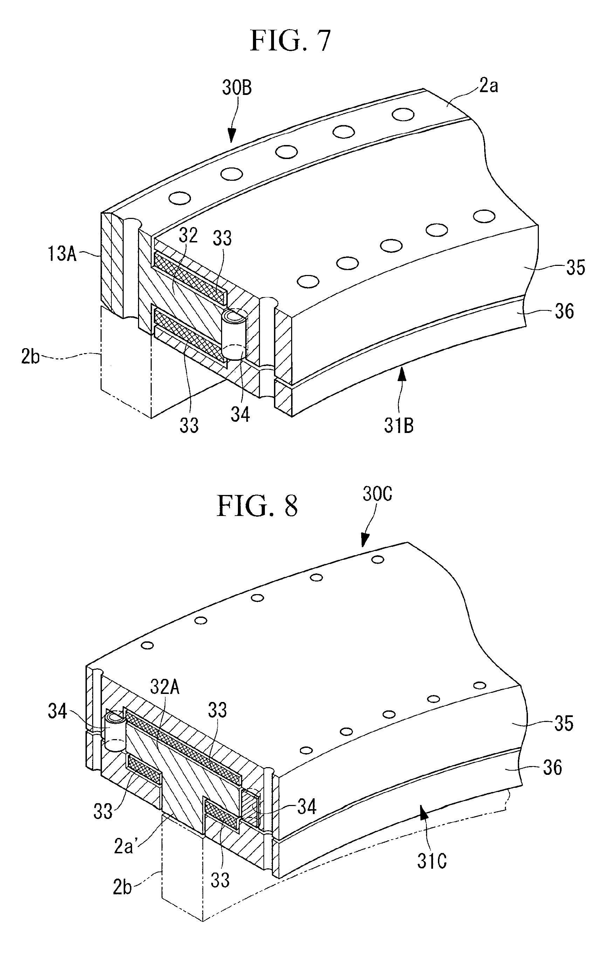

Next, a third embodiment of the wind turbine generator according to the present invention will be described on the basis of Fig. 7. Note that the same reference signs are given to the same components as those in the above-described embodiment, and detailed descriptions thereof will be omitted.
In this embodiment, a turning portion 31A of a yawing sliding bearing 30B has an integrated structure in which a pair of top and bottom rings 35 and 36 are connected.

With the pair of top and bottom rings 35 and 36, the ring 35, which has a substantially L-shaped cross-section and which is disposed at the top portion, is connected to the ring 36, which has a substantially rectangular cross-section and which is disposed at the bottom portion, thereby forming, as a whole, a ring member of the turning portion 31B having a substantially angular U-shaped cross-section. In addition, when integrating the top and bottom ring members 35 and 36, the rolling elements 34 are installed so as to be sandwiched between the two ring members 35 and 36.
Note that the horizontal bearing members 33 are individually secured to opposing surfaces in advance, before integrating the top and bottom ring members 35 and 36 by connecting them.

If the turning portion 31B employs an integrated ring shape and an integrated structure, in which the horizontal bearing members 33 and the rolling elements 34 are installed in this way, the number of parts to be transported to a construction site and assembled at the construction site can be small. Therefore, the number of work processes at a construction site during assembly can be reduced, and, moreover, setting of clearances formed between the sliding surfaces of the rolling elements 34 and the inner-circumferential-side vertical surface of the stationary portion 32 can also be accurately adjusted at a factory where adequate equipment is provided.

### <Fourth Embodiment>

Next, a fourth embodiment of the wind turbine generator according to the present invention will be described on the basis of Figs. 8 and 9. Note that, the same reference signs are given to the same components as those in the above-described embodiment, and detailed descriptions thereof will be omitted.
In an embodiment shown in Fig. 8, a yawing sliding bearing 30C is provided with a yawing sliding bearing 30C that is configured so that a flange that serves as a stationary portion 32A has a T-shaped cross-section and so that top and bottom support surfaces thereof are formed at an inner circumferential side and an outer circumferential side of the stationary portion 32A.

That is, the stationary portion 32A of this embodiment is a flange portion that is horizontally formed toward the inner side and the outer side of the tower 2 from the top end of the tower 2, more specifically, from the hollow-cylindrical member 2a', which is a separate piece secured to the top end of the tower body 2b. The stationary portion (flange portion) 32 forms a sliding bearing by having the top and bottom flat portions thereof come in contact with the horizontal sliding members 33 secured to the turning portion 31C.

In addition, in the illustrated yawing sliding bearing 30C, the rolling elements 34 are disposed on an inner circumferential side and an outer circumferential side of the T-shaped stationary portion 32A and are in contact with end surfaces of the flange portion; however, the rolling elements 34 may be disposed only on one of the inner circumferential side and the outer circumferential side, and the radial-direction clearances can be made small by employing either configuration.
Because the rigidity of the stationary portion 32A having the T-shaped cross-section is increased as compared with the cantilevered-beam stationary portion 32 described above, such a yawing sliding bearing 30C can suppress deformation of a yawing sliding bearing structure due to the load of the moment load. That is, a yawing device that makes turning of the nacelle 3 smooth can be realized; alternatively, by reducing the size of the stationary portion 32A having the T-shaped cross-section, approximately equivalent rigidity to the cantilevered-beam stationary portion 32 can be ensured.

In addition, in a first modification of this embodiment shown in Fig. 9, positions at which the rolling elements 34 are disposed are changed from the positions that come in contact with the inner-circumferential-side end surface and the outer-circumferential-side end surface of the T-shaped stationary portion 32A to positions that come into contact with an inner-circumferential surface and an outer-circumferential surface of the tower 2. The rolling elements 34 in this case are disposed inside rolling-element accommodating portions 37 that are formed on the bottom-side ring member 36. That is, in the yawing sliding bearings 30C and 30C' having the T-shaped stationary portion 32A, the rolling elements 34 are disposed on at least one of the inner circumferential side and the outer circumferential side so as to come in contact with the stationary portion 32A; however, positions in the top-bottom direction in this case may be positions that come in contact with the end surfaces of the flange portion or positions that come in contact with wall surfaces of the tower 2.
Note that, although the rolling elements 34 are disposed on the inner circumferential side and the outer circumferential side of the tower 2 in the illustrated example configuration, a configuration in which they are disposed only on one side may be employed.

In this way, the above-described present invention is configured so that radial-direction clearances are defined by the rolling elements 34 by employing a sliding bearing that is advantageous for yawing ring bearings, whose size has been increasing, and shifting of shaft centers can be reduced by making the radial-direction clearances small. Accordingly, the yawing device 10A can be smoothly operated by preventing unwanted loads from acting on the stationary gear 21 and the drive gear 24.
Therefore, the wind turbine generator 1 provided with the yawing device 10A in which a sliding bearing is employed as a yawing ring bearing makes turning of the nacelle 3 smooth, thereby enhancing the reliability and durability.

In addition, the individual embodiments described above are not limited to those described on the basis of the illustrations, and appropriate combinations of configurations are possible, for example, employing spring-preloaded mechanisms, and so on. That is, the present invention is not limited to the above-described embodiments, and appropriate alterations are possible within a range that does not depart from the spirit thereof.

## Claims

1. A wind turbine generator that turnably supports a nacelle installed at the top of a tower via a yawing sliding bearing, wherein the yawing sliding bearing is provided with a sliding member disposed between top and bottom support surfaces of a flange formed mainly at a stationary portion and a turning portion and a rolling element disposed between the stationary portion of the yawing sliding bearing and the turning portion.

2. A wind turbine generator according to Claim 1, wherein the rolling element is a roller follower and the turning portion is arranged in a circumferential direction by being divided into multiple portions.

3. A wind turbine generator according to Claim 2, wherein the roller follower is provided with a clearance-adjusting mechanism.

4. A wind turbine generator according to one of Claims 1 to 3, wherein, in the yawing sliding bearing, the flange has a T-forming top and bottom support surfaces on an inner circumferential side and an outer circumferential side of the stationary portion, and the rolling element is provided on at least one of the inner circumferential side and the outer circumferential side of the stationary portion.
